Europäisches Patentamt

European Patent Office

Office européen des brevets

(19)

(11) Veröffentlichungsnummer: **0 261 373**
**B1**

(12) **EUROPÄISCHE PATENTSCHRIFT**

(45) Veröffentlichungstag der Patentschrift:
22.11.90

(51) Int. Cl.⁵: **G11B 23/087**

(21) Anmeldenummer: 87111650.5

(22) Anmeldetag: 12.08.87

(54) Quaderform-Kassette fuer bandfoermige Aufzeichnungstraeger und Gehaeuseteil davon.

(30) Priorität: 16.08.86 DE 8621947 U

(43) Veröffentlichungstag der Anmeldung:
30.03.88 Patentblatt 88/13

(45) Bekanntmachung des Hinweises auf die Patenterteilung:
22.11.90 Patentblatt 90/47

(84) Benannte Vertragsstaaten:
AT BE CH DE ES FR GB GR IT LI NL SE

(56) Entgegenhaltungen:
EP-A- 0 151 210
DE-A- 2 348 994
DE-A- 2 707 804
FR-A- 2 532 098
FR-A- 2 532 099
GB-A- 2 053 849
GB-A- 2 074 131

(73) Patentinhaber: BASF Aktiengesellschaft,
Carl-Bosch-Strasse 38, D-6700 Ludwigshafen(DE)

(72) Erfinder: Hoffrichter, Bernd, Pappelweg 2,
D-7604 Appenweier(DE)
Erfinder: Bozidar, Pavelka, Rheinstrasse 6,
D-7608 Willstaett(DE)
Erfinder: Pfefferkorn, Dietmar, Muehlweg 71,
D-6944 Hemsbach(DE)
Erfinder: Schaeffer, Norbert, Vogelsang 19,
D-6705 Deidesheim(DE)
Erfinder: Goetz, Klaus, Kiefernweg 8,
D-6730 Neustadt(DE)

**Beschreibung**

Die Erfindung betrifft eine Quaderform-Kassette für bandförmige Aufzeichnungsträger, bestehend aus Boden- und Deckelwänden und Vorder-, Rück- und Seitenwänden, die zumindest eine drehbare Spule und einen bandförmigen Aufzeichnungsträger umschließen, wobei die Vorder-, Rück- und Seitenwände wenigstens teilweise als Abstandhaltekörper zwischen den Boden und Deckelwänden ausgebildet und befestigt sind, und wobei wenigstens ein Gehäuseteil Öffnungen zum Durchtritt von Geräteorganen an den Aufzeichnungsträger aufweist und nahe diesem Gehäuseteil Führungs- und/oder Ausrichtelemente für den Aufzeichnungsträger angeordnet sind, und ein Gehäuseteil für das Kassettengehäuse.

Aus den DE-OS 3 019 442 und 3 111 304 sind Kompaktkassetten bekannt, deren Gehäuse aus rahmenförmigen Zwischenteile mit relativ flachen Boden- und Deckelteilen bestehen. Teile des Zwischenrahmens sind dabei als Bandführungselemente ausgebildet. Derartige Zwischenrahmen bestehen dabei aus Metallgußmaterial oder Verbundharzwerkstoff mit Glasfasereinlage. Hohe Anforderungen an die Ausrichtung und geringe Toleranzen der Führungselemente sind damit nicht zu erfüllen.

Es ist aus der DE-OS 2 348 994 eine Kompaktkassette bekannt, bei der die Bandführung über einen separaten Führungskörper erfolgt, der durch vorspringende Elemente zwischen den Gehäuseschalenhälften positioniert und durch den Deckel festgehalten wird. Die eigentlichen Führungselemente sind dabe spezielle Gleitflächen an Teilen des Führungskörpers, der aus Polyacetalharz besteht ggfs durch Glasfasern verstärkt. Das Material soll dabei abriebfest sein und einen kleinen Reibungskoeffizienten besitzen. Die Genauigkeit der Lage und Ausbildung der eigentlichen Führungselemente läßt sich dadurch nicht erhöhen.

Aus der DE-OS 2 707 804 ist es weiterhin bekannt, eine separate Bandführungseinheit die auch die Bandumlenkrollen einer Kompaktkassette umfaßt zwischen die Gehäusehälften so einzusetzen, daß die Spannungen und Verwerfungen und das Verziehen der Kunststoff-Einzelteile kompensiert werden. Die vertikalen Bandlauftoleranzen werden zwar durch Stege an den Innenseiten der Gehäusehälften eingeschränkt, die Lage und Ausbildung der Einzel-Führungselemente jedoch nicht verbessert.

Aus dem DE-GM 8222016 ist es ferner bekannt, eine Magnetbandkassette mit Bandführungselementen auszubilden, die über ausschließlich in einer Ebene senkrecht zu einer Bezugsebene wirkende Einstellvorrichtungen einstellbar sind. Damit ist zwar eine momentane Kompensation von Kassetten- oder Bandtoleranzen möglich, die Führungselemente sind jedoch in idealer Lage fixierbar, und ein Verstellen einer eingestellten Position ist nicht verhinderbar.

Es ist Aufgabe der vorliegenden Erfindung, eine Quaderform-Kassette für bandförmige Aufzeichnungsträger gegenüber dem Stand der Technik zu verbessern.

Die Aufgabe wird gemäß Anspruch 1 gelöst, wenn bei einer Quaderform-Kassette, wie in der Einleitung definiert, der Gehäuseteil mit den Öffnungen als separater Teil ausgebildet und zur Aufnahme von zumindest einem Teil der Führungs- und Ausrichtelemente eingerichtet ist und die Boden- oder Deckelwand eine Referenzfläche aufweist, auf der der Gehäuseteil befestigbar ist. Damit wird erreicht, daß durch den separaten Gehäuseteil besonders der Bereich eines Kassettengehäuses, der auf die Aufzeichnungs- und Wiedergabeoperation den größten Einfluß hat, für sich und dadurch besonders genau herstellbar ist und dennoch in vorgegebener Lage am übrigen Gehäuse anbringbar ist. Die Auswahl des jeweiligen besonders geeigneten Gehäuseteils, insbesondere aus dem Vorderteil, ist so getroffen, daß entweder bei üblichen Kompakt-Kassetten - die Öffnungen der Vorderwand selbst eine vorbestimmte Größe und Lage in Bezug auf die Magnetköpfe besitzen oder - wie bei handelsüblichen Video-Kassetten die untere (bzw. obere) Gehäusekanten zur Ausrichtung der Kassette diesseits und dadurch zum und nach Herausziehen des Aufzeichnungsbandes eine Referenzposition des Gehäuses erzielt wird.

Durch die Kassette nach der Erfindung wird erreicht, daß eine relativ zum Kassettengehäuse ideale Bandführung gewährleistet ist und Aufzeichnungsund Wiedergabe-Fehler durch räumliche Anordnungsfehler von Gehäuse und Führungs- oder Ausrichtelementen auszuschalten sind.

In weiterer Ausbildung ist der separate Gehäuseteil mit Paßbohrungen wie Aufnahme von Paßstiften als Führungselemente für den Aufzeichnungsträger ausgebildet ist.

Damit sind bei Herstellung verfahrensmäßig die Führungs- und Ausrichtelemente bereits vor dem Zusammenbau mit dem übrigen Kassettengehäuse einsetzbar und der komplettierte separate Gehäuseteil ist als ganzes mit dem übrigen Gehäuse einfach zusammensetzbar, so daß Fertigungs- und Zusammenbauerleichterungen realisiert werden.

Zweckmäßig sind zum Kasetteninnern hin die Führungs- und Ausrichtelemente auf dem separaten Gehäuseteil mittels eines Abstandskörpers abgedeckt. Die Anbringung und Ausrichtung des Abstandskörpers ist somit äußerst genau möglich, wodurch dessen zumindest mittelbare Führungs- und Ausrichtfunktion ebenfalls verbessert und präzisiert wird.

In weiterer praktischer Ausgestaltung kann der Abstandkörper auch direkt an der die Referenzfläche aufweisenden Boden- oder Deckelwand des Gehäuses befestigt sein. Selbstverständlich kann der Abstandskörper auch am separaten Gehäuseteil selbst, wenn dieser dafür eingerichtet ist, befestigt sein.

In weiterer Ausbildung der erfindungsgemäßen Kassette, wenn diese zwei koplanare Spulen enthält, kann der separate Gehäuseteil das Mittelstück der Vorderwand umfassen. Damit reduziert sich der separate Gehäuseteil auf den in diesem Fall wichtigsten Bereich der Kassette. Es ist praktisch vorteilhaft, wenn der Gehäuseteil außer mit einem ersten Teil einer Wand mit Öffnungen auch mit einem zweiten Wandteil, der die die Referenzfläche tragende Boden- und/oder Deckelwand teilweise ersetzt oder abdeckt, ausgebildet ist.

In herstellungsgünstiger Ausbildung kann der Abstandshaltekörper mit eingesetzten Führungselementen, insbesondere aus Stahl bestehend, ausgebildet sein. In weiterer günstiger Ausbildung können zum Einmessen oder Kontrollieren der Position von Führungselementen in deren Nähe lösbar befestigte Abstandshaltekörper an mindestens einer der Boden- oder Deckelwände vorgesehen sein, wodurch das Einmessen/Kontrollieren auch noch nach Aufsetzen der Deckelwand einfach möglich ist. In zweckmäßigen Ausführungen sind diese lösbaren Abstandshaltekörper Eckteile, die Führungs-und Ausrichtelemente mit Bandumlenkfunktion nach außen abdecken. In weiterer Ausbildung können die Abstandshaltekörper an den Seiten des Gehäuses und um die vorderen und hinteren Ecken der Quaderform-Kassette herumreichend angeordnet sein.

Es ist ferner zweckmäßig, wenn Paßbohrungen und -stifte vorgesehen sind, mittels der insbesondere der Gehäuseteil und Abstandshaltekörper relativ zu den Boden- und/oder Deckelwänden der Kassette ausrichtbar sind. Damit ist eine genaue Zuordnung sicherstellbar.

Es ist weiter günstig, wenn der Gehäuseteil wenigstens einen Teil der Kassette, insbesondere einen erhöhten äußeren Teil umfaßt, der wenigstens teilweise einen Referenzbereich für das zugehörige Kassettengerät bildet. Bei der Kompaktkassette kann der erhöhte Kopfeintrittsgehäusebereich der Kassette vorteilhaft dafür benutzt werden.

Für extreme Genauigkeitsanforderungen ist es günstig, wenn ein einziges Gehäuseteil mit Führungs-und Ausrichtelementen vorgesehen ist, das so angeordnet ist, daß die Kassette nur mit einer der Boden-oder Deckelwände auf- oder anliegend benutzbar ist.

Einzelheiten der Erfindung sind nachfolgend beschriebenen und in der Zeichnung dargestellten Ausführungsbeispielen entnehmbar.

In der Zeichnung zeigen

Figur 1 eine Explosionsdarstellung einer erfindungsgemäßen Kompaktkassette

Figur 1A eine Teilansicht der Bodenwand von unten und eine Draufsicht auf einen dazugehörigen Führungseinsatz

Figuren 2 und 3 schematische Darstellungen von Abstandshaltekörpern innerhalb von Kassettengehäuseumrissen

Figur 4 einen Teil einer Boden- oder Deckelwand einer Kassette, einen Abstandshaltekörper und einen separaten Wandteil, perspektivisch

Figur 5 einen Teil einer Boden- oder Deckelwand und einen separaten Gehäuseteil mit integrierten Abstandshaltekörper

Figur 6 einen separaten Gehäuseteil mit Abstandshaltekörper und integrierten Umlenkröllchen

Figur 7 Geräuschmessungs-Diagramme

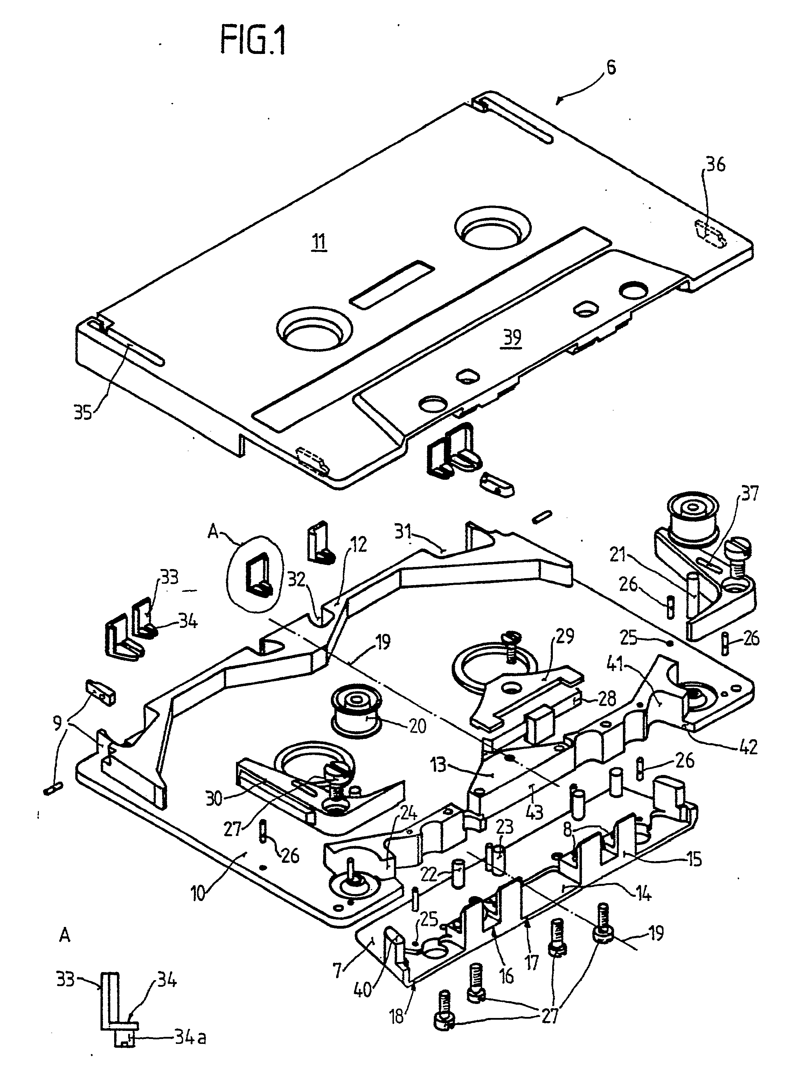

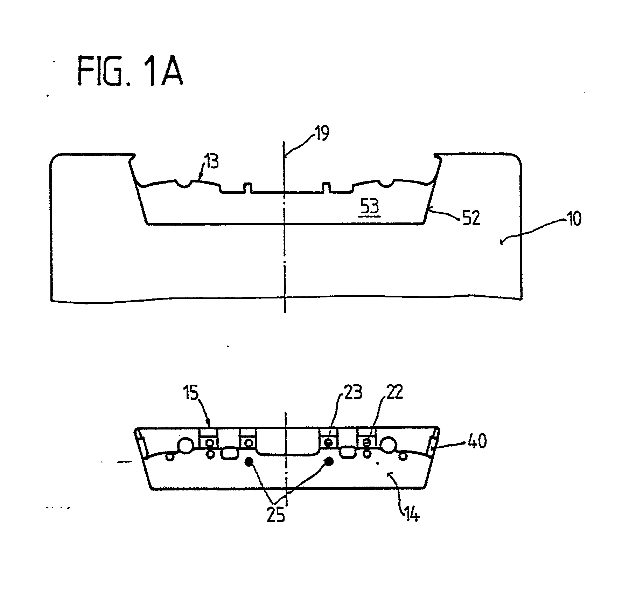

In Figur 1 ist eine Kompaktkassette 6 dargestellt - für hier nicht dargestellte koplanare Spulen 8 und 9 und ein Magnetband 7 - mit einem etwa Quaderform-Gehäuse, bestehend aus einer Bodenplatte 10, Deckelplatte 11, einem rückseitigen Abstandshaltekörper, kurz als Rückteilkörper 12 bezeichnet, einen vorderen Abstandshaltekörper, kurz als Vorderteilkörper 13 bezeichnet, einem Gehäuseteil 14, einem Mittelstück der Vorderwand 15 mit Eintritts- oder Austrittsöffnungen 16 bis 18 die zur Mittellinie 19 symmetrisch liegen, wie auch die Umlenkrollen 20 mit Achsen 21. Ebenfalls symmetrisch zur Linie 19 sind Führungs- und Ausrichtzapfen 22 und 23 in Paßbohrungen 58 sowie Führungs- und Ausrichtkanten 24 am Vorderteilkörper 13 vorgesehen. Im folgenden wird von Führungszapfen, -kanten usw. gesprochen. Über Paßbohrungen 25 und Paßstifte 26 werden die Teile 10, 13 und 14 sehr genau zueinander ausgerichtet und mittels Schrauben 27 (und entsprechenden Gewindebohrungen) miteinander fest verbunden. Eine Andruckfeder 28 mit Halteblech 29 ist mittig am Vorderteilkörper 13 befestigbar. Der Gehäuseteil 14 wird im folgenden als Führungseinsatz 14 bezeichnet.

Abstandskörper, Eckkörper 30 sind etwa L-förmig um die Vorderecken des Gehäuses herumreichend und mittels Schrauben 27 auf der Bodenplatte 10 lösbar befestigbar. An der Rückseite des Rückteilkörpers 12 sind Aussparungen 31 und 32 wiederum paarweise symmetrisch zur Mittellinie 19 vorgesehen.

Mittels Stellelementen 33 in L-Form im Querschnitt, einen geschlitzten Lagerzapfen 34 a und einen Betätigungsschlitz 34 sind Lösch-, Bandsorten-und andere Funktionen beliebig einstellbar. Die Deckelplatte 11 weist am hinteren Ende Klemmeinschnitte 35 und der Rückteilkörper 12 entsprechende Gegenmittel 59 auf zum schraubenlosen Verschluß des Gehäuses Innenstege an der Deckelplatte 11 wirken dazu auch noch mit Schlitzen 37 in den Eckkörpern 30 die Gehäuseteile 10 und 11 lösbar verbindend zusammen. Selbstverständlich können die Boden- und Deckelplatten 10 und 11 auch mittels Schrauben in herkömmlicher Weise verbunden werden. Es soll nur sichergestellt werden, daß die Kassette auch von Amateuren problemlos geöffnet werden und das Band gewechselt werden kann, z.B. um die Bandsorte (Eisenoxid-, Chromdioxid-, Metallpigment oder Metallschichtband, ggfs. auch jeweils Referenzbänder) zu ändern.

Die sonstigen Einzelteile und die Form der Kompaktkassette entsprechen der maßgebenden IEC-Norm 94-7, 1985. Es wird noch darauf aufmerksam gemacht, daß die etwa 4-eckigen Aussparungen 38

3

(symmetrisch zur Linie 19 in Figuren 24.3) an ihren Hinterkanten eine Refrenzlinie für die Ausrichtung der Kassette zum Gerät darstellen.

Der genormte, erhöhte Deckelbereich 39, vorne an der Deckelplatte 11 kann als Umrißform des Mittelstücks oder Führungseinsatzes 14 benutzt werden, s. z.B. Bodenteil 57 in Figur 1. Unter der Voraussetzung, daß die genormte Form der Kompaktkassette gewahrt bleibt oder eine andere Art einer Aufzeichnungsträgerkassette, z.B. Film-, Video-, Daten- oder beliebige Band- oder Streifenkassette vorliegt, kann die Form des Führungseinsatzes auch anders ausgewählt sein.

Im beschriebenen Beispiel stellt die Bodenplatte 10 die Verbindung zum Gerät her und dient für die Kassette als Bezugs- oder Referenzebene. Die Bodenplatte 10 sollte daher aus möglichst spannungsfreien, temperaturunabhängigen, verwindungssteifem Material (wie unten aufgezählt) bestehen und sehr genau und eben bearbeitbar sein. Referenzflächen sollten besonders für die Befestigung des Führungseinsatzes 14 vorgesehen sein, im vorliegenden Fall in Figur 1, z.B. die Unterseiten des Vorderteilkörpers 13 und evtl. der benachbarten Teile der Bodenwand 10. Figur 1A zeigt einen Teil der Bodenwand 10 von unten, worin im Umrißbereich des erhöhen Bereich (beim Deckelteil oben mit 39 bezeichnet) eine etwa trapezförmige Vertiefung vorgesehen ist. Der Rand 52 als auch die Fläche 53 der Vertiefung können als Referenzflächen für den entsprechend geformten Führungseinsatz 14 dienen. Eine Vertiefung, deren Fläche 53 mit der doppelten Ebenheitstoleranz zu fertigen ist, wie für die systembedingten Referenzbereiche der Bodenplatten-Außenfläche ist nicht erforderlich, um die Ausrichtung von Führungseinsatz 14 und Bodenwand mit ausreichender Genauigkeit, die schon allein durch Paßelemente 26, 25 erreichbar ist, sicherzustellen. Auf dem Führungseinsatz 14 können, wie in Figur 1 dargestellt, einige der wesentlichsten Führungselemente (22, 23) angebracht sein, da diese in unmittelbare Nähe der Kopfeintrittsöffnung 17 angeordnet sind und damit die Band-Kopf-Zuordnung überwiegend bestimmen.

Die Höhenlage der Oberfläche des Führungseinsatzes 14 gegenüber den übrigen Kassettenmaßen ist genormt, so daß die Höhenmaße in erster Linie werkstoffunabhängig einzuhalten sind. Die Fläche der Unterseite des Führungseinsatzes 14 muß außerdem planparallel zu der großen Außenfläche der Bodenplatte 10 ausgebildet und angeordnet sein. Die Führungselemente auf dem Führungseinsatz 14 sind außer den Führungszapfen 22 und 23 die stationären Stege 40, die zur Linie 19 symmetrisch angeordnet sind, die aber auch direkt an der Bodenplatte 10 ausbildbar oder anbringbar sein können.

Wie oben beschrieben, ist in Figur 1 der Vorderteilkörper 13 entweder einstückig mit der Bodenplatte 10 ausgebildet oder aber darauf in vorgegebener Lage und Weise damit so befestigbar, daß dieser selbst als Referenzkörper, wie in vorliegendem Beispiel beschrieben, verwendbar ist. In diesem Fall dienen die Flächen 41, am Vorderteilkörper 13, den Außenflächen der Stege 40 als Referenzflächen. Ferner bilden die Ausschnittinnenkanten 42 der Bodenplatte 10 sowie die unteren Flächen 43 des Vorderteilkörpers Referenzflächen für den Führungseinsatz 14.

Als hochgenaue Ausrichtmittel für den Vorderteilkörper 13 in bezug auf die Bodenplatte 10 bzw. den Führungseinsatz in bezug auf die beiden ersten Teile diese oben erwähnten Paßstifte 26 und -bohrungen 25. Auch die Führungszapfen 22 und 23 selbst und auch die Eckkörper 30 sind mittels derselben Paßverbindungselemente optimal ausrichtbar. Die eigentliche Befestigung erfolgt dann mittels der Schraubverbindungen 27. Es wird eine sehr genaue Ausrichtung mit einer Abweichung nur weniger μm über die Höhe von 3,81 mm angestrebt und in der Praxis realisiert.

Während die Führungszapfen 22 und 23 notfalls durch die Vorderwandöffnungen 16 bis 18 nachmeßbar sind, sind die Achsen 21 der Umlenkrollen 20 nach dem Zusammenbau des Gehäuses nicht mehr zugänglich. Zur Behebung dieses Nachteils können die Eckkörper 30 sehr vorteilhaft entweder zumindest teilweise durch ggfs. abdeckbare Öffnungen oder ausreichend transparentes Material fensterartig optisch durchgängig sein, für z.B. optische Ausrichtmessungen fotografische Aufnahmen etc. oder, wie schon oben erwähnt, es sind die Eckkörper entfernbar und nach dem Messen in das sonst bereits zusammengesetzte Gehäuse einsetzbar und befestigbar.

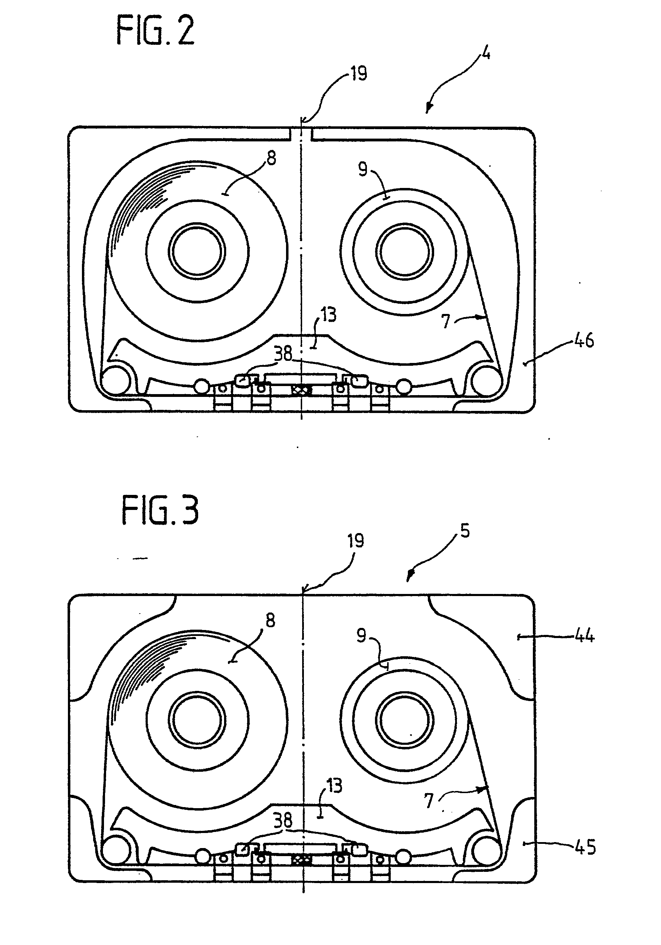

In Figuren 2 und 3 sind weitere schematische Ausführungen von Kassetten (4,5) mit zwei koplanaren Spulen und Eckkörpern dargestellt. In Figur 3 sind vier Eckkörper 44, 45, den Vorderteil-Eckkörpern 30 etwa formmäßig entsprechend vorgesehen.

In Figur 2 sind Abstandshaltekörper 46 vorgesehen, die an zwei einander gegenüberliegenden Gehäuseseiten und um die vorderen und rückwärtigen Gehäuseecken angeordnet sind. Vorteilhaft sind alle Körper 44 - 46 mit Ausrichtmitteln, z.B. Paßstiften 26 und Schrauben 27 oder gleichwertigen Befestigungsmitteln auf dem Boden- oder Deckelteil 10 bzw. 11 lösbar befestigt, wenn sie nicht wie oben erwähnt, mit Fenstern oder aus Transparentmaterial ausgebildet sind.

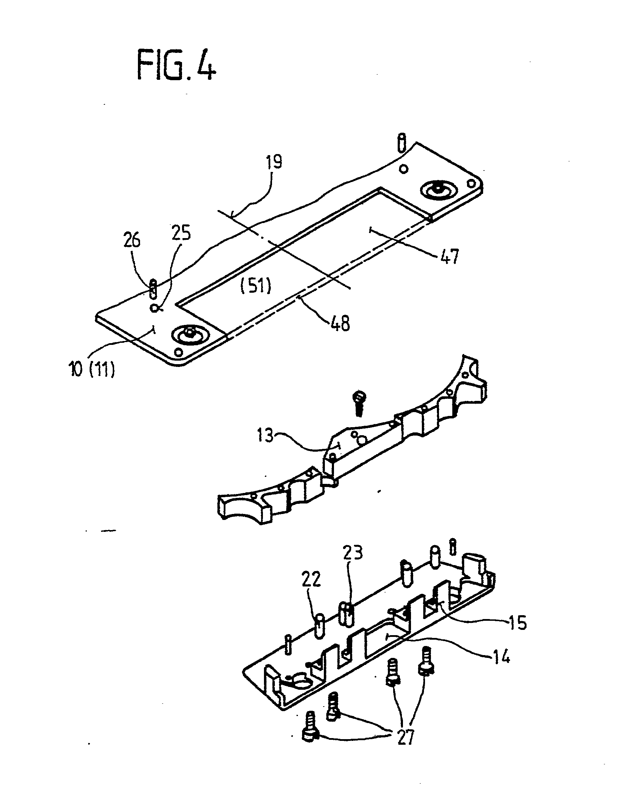

Figur 4 zeigt noch einmal in schematischer Einzelheitendarstellung, daß die Bodenplatte 10 mit einem Rechteckausschnitt 47, der der Umrißkontur des Führungseinsatzes 14 genau angepaßt sein kann, ausbildbar ist und der Vorderteilkörper 13 mit eigenem Ausricht- und Befestigungselementen auf dem Bodenteil 10 ausgebildet sein kann.

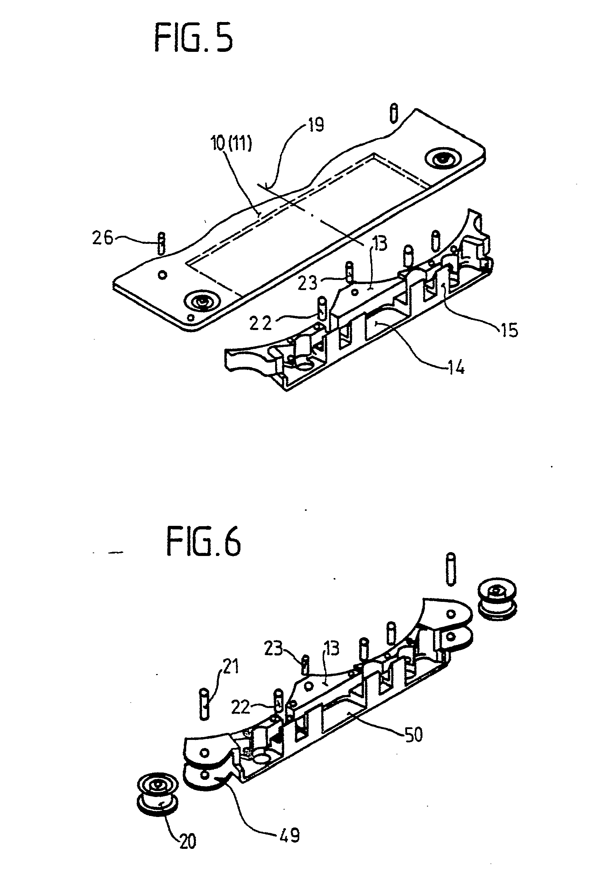

Es ist durch die gestrichelte Vorderkante 48 der Bodenplatte 10 auch die Möglichkeit angedeutet, daß der Führungseinsatz 14 auf eine nicht ausgeschnittene Referenzfläche (51) des Boden- oder Deckelteils aufsetzbar, darauf über Paßelemente ausrichtbar und geeignet befestigbar ist (s. Figur 5). Die Maße wären dann entsprechend der Norm einzurichten und der Boden- oder Deckelteil müßten dann mit entsprechenden erhöhten Bereichen versehen werden.

In Figur 5 ist der Vorderteilkörper 13 bereits auf dem Führungseinsatz 14 angebracht, z.B. mittels Paßstiften 26 ausgerichtet, oder baulich völlig integriert, z.B. durch einstückige Herstellung und anschließende Fein-und ggfs. Feinstbearbeitung.

Figur 6 zeigt eine weitere Ausführung eines Führungseinsatzes 50 mit integrierten Umlenkrollen 20 und Achsen 21. Halterungen 49 machen die Umlenkrollen 20 völlig gehäuseunabhängig. Wenn vorstehend auch ein einziger Führungseinsatz beschrieben ist, ist auch eine mehrteilige Ausbildung realisierbar.

Wesentlich ist beim Erfindungsgegenstand ein geeigneter Werkstoff, der sich einer Fein- und Feinstbearbeitung unterziehen läßt, wie z.B. Messing, Stahl, harte Metallegierungen, Keramik, Sinterwerkstoffe, Glaswerkstoffe, Kunststoffe mit hoher Festigkeit, z.B. (hohem Glasfaseranteil usw.).

Im Vergleich zu Kompakt-Kassetten der höheren Qualitätsklasse ergeben sich mit einer Präzisionskassette gemäß vorliegender Erfindung bei der die Führungselemente in Bezug auf ihre Neigung zur Referenzfläche in einer Genauigkeit von $\leq \pm 5$ µm über eine wirksame Führungslänge von 3,81 mm und eine Konizität unter $\pm 5$µm aufweisen und bei Führungsrollen der Schlag unterhalb von oder gleich 10 µm beträgt, folgende Ergebnisse.

Es wurden drei verschiedene Messungen durchgeführt

1) Wow- u. Flutter-Messung mittels eines Rekorders (R 1) der Fa. Onkyo, Typ TA 2022 und eines Rekorders (R 2) der Fa. Pioneer Typ CT 740.

2) Phasenfehlermessung auf einem der Fa. Nakamichi, Bezeichnung Nakamichi 700

3) Laufgeräuschmessung mit einem Meßrecorder der Fa. Revox, B 710 und einem Meßaufbau im wesentlichen bestehend aus Präzisionsmikrofon und Pegelschreiber der Fa. Bruel & Kjaer, Kopenhagen, Typ 2305, bewertet mit dem Schallkurvenfilter Schallpegelkurve nach DIN (IEC 651).

Verglichen wurde obengenannte Präzisionskassette mit einer hochwertigen Kompaktkassette mit geschlossenem Metallrahmen (A) und Kunststoff-Deckel-und Bodenteilen sowie mit offenem Metallrahmen, Kunststoff-Vorderteil mit Metallführungs- und Lagerstiften und Kunststoff-Umlenkrollen (B) (beide Vergleichskassetten waren keine Kassetten der Anmelderin).

Ergebnisse:

1. Wow- und Flutter-Messungen

|     | Rekorder R1 |      | Rekorder R2 |      |
| --- | --- | --- | --- | --- |
|     | E1   | E2   | E1   | E2   |
| A   | 0,33 | 0,42 | 0,37 | 0,80 |
| B   | 0,30 | 0,43 | 0,38 | 0,42 |
| XX  | 0,26 | 0,31 | 0,28 | 0,39 |

E1 = Mittelwert der Störpegel über die Gesamtzahl der Meßwerte
E2 = Mittelwert der 10 größten Störpegel

(Die angegebenen Mittelwerte sind unbewertet.) Gesamtanzahl der Meßwerte: 200.
Daraus ergibt sich eine Verringerung der Wow- und Flutter-Störungen im Bereich von 21 bis 26 % beim Rekorder R1 und 9 bis 51 % beim Recorder R2.

2. Phasenvergleiche
Die Messungen wurden mit einem Referenzsignal von 10 KHz durchgeführt und hatten die folgenden Ergebnisse:

|     | Seite A | Seite B |
| --- | --- | --- |
| A   | −130°   | −80°    |
| B   | +160°   | +150°   |
| XX  | 0°      | entfällt, da nur eine Betriebslage |

Damit ergibt sich eine vollständige Beseitigung jeglicher Phasenfehler durch eine einseitig betreibbare erfindungsgemäße Präzisionskassette.

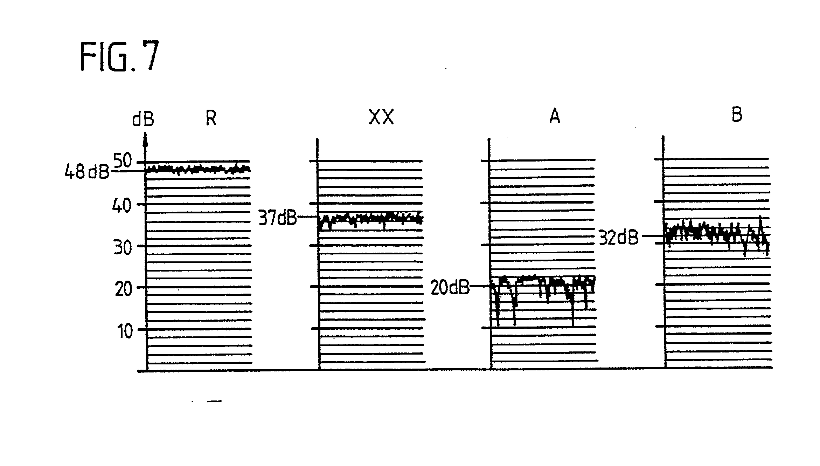

3. Geräuschmessung
In den Geräuschmessungsdiagrammen der Figur 7 sind die Geräusche der Kassetten A, B und XX nebeneinander dargestellt, mit dem Ruhegeräusch der Meßanlage als Vergleichsmessung.

5

Es ergibt sich bei den Vergleichskassetten sowohl eine deutlich größere Amplitude des Störsignals als auch ein (bei A wesentlich) größerer Abstand von mindestens 6dB (Kassette B) und maximal 17dB (Kassette A) bei einem Vergleichsabstand von ca. 48dB, den das Ruhegeräuschsignal der Meßanlage besitzt.

Die erfindungsgemäße Präzisionskassette besitzt also ein deutlich vermindertes Störgeräusch und wegen der deutlich geringeren Amplitude auch einen sehr viel kleineren Wahrnehmungsgrad für das menschliche Gehör gegenüber den nächstkommenden, auf dem Kassettenmarkt angebotenen Vergleichskassetten.

**Patentansprüche**

1. Quaderform-Kassette für bandförmige Aufzeichnungsträger, bestehend aus Boden- und Deckelwänden (10 und 11) und Vorder-, Rück- und Seitenwänden, die zumindest eine drehbare Spule (8, 9) und einen bandförmigen Aufzeichnungsträger (7) umschließen, wobei die Vorder-, Rück- und Seitenwände wenigstens teilweise als Abstandshaltekörper zwischen den Boden- und Deckelwänden (10, 11) ausgebildet und befestigt sind und wobei wenigstens ein Gehäuseteil Öffnungen (16–18) zum Durchtritt von Geräteorganen an den Aufzeichnungsträger aufweist und wenigstens nahe diesem Gehäuseteil Führungs- und/oder Ausrichtelemente für den Aufzeichnungsträger (7) angeordnet sind, dadurch gekennzeichnet, daß der Gehäuseteil mit den Öffnungen (16–18) als separates Teil (14) ausgebildet und zur Aufnahme von mindestens einem Teil der Führungs- und Ausrichtelemente (19–24) eingerichtet ist und die Boden- oder Deckelwand (10, 11) wenigstens eine Referenzfläche (51, 52, 53) aufweist, auf der der Gehäuseteil (14) befestigbar ist.

2. Kassette nach Anspruch 1, dadurch gekennzeichnet, daß der Gehäuseteil (14) mit Paßbohrungen (58) zur Aufnahme von Paßstiften (22, 23) als Führungselemente für den Aufzeichnungsträger (7) ausgebildet ist.

3. Kassette nach Anspruch 1 oder 2, dadurch gekennzeichnet, daß zum Kasseteninnern hin die Führungs- und Ausrichtelemente (19–24) auf dem separaten Gehäuseteil (14) mittels eines Abstandshaltekörpers (13) abgedeckt sind.

4. Kassete nach Anspruch 1 bis 3, dadurch gekennzeichnet, daß der Abstandshaltekörper (13) an der die Referenzfläche (51, 52) aufweisenden Boden- oder Deckelwand (10 oder 11) befestigt ist.

5. Kassette nach Anspruch 1 bis 3, dadurch gekennzeichnet, daß der separate Gehäuseteil (14) auch zur Aufnahme und Befestigung des Abstandshaltekörpers (13) eingerichtet ist (Fig. 5 und 6).

6. Kassette nach Ansprüchen 1 bis 5, dadurch gekennzeichnet, daß bei einer Kassette (Fig. 1, 2, 3) mit zwei koplanaren Spulen (8, 9) der separate Gehäuseteil (14) das Mittelstück der Vorderwand einschließt.

7. Kassette nach Anspruch 1 oder 6, dadurch gekennzeichnet, daß am Gehäuseteil (14) außer einem Mittelstück der Vorderwand auch ein Bodenteil (57) vorgesehen ist, der die die Referenzflächen (51, 52, 53) tragende Boden- oder Deckelwand (10, 11) teilweise ersetzt.

8. Kassette nach Anspruch 6, dadurch gekennzeichnet, daß der separate Gehäuseteil (14) den die Referenzfläche (51, 52, 53) tragenden Boden-und/oder Deckelteil (10 bzw. 11) wenigstens teilweise ersetzt oder abdeckt.

9. Kassette nach Ansprüchen 1 bis 8, dadurch gekennzeichnet, daß der Abstandshaltekörper (13) mit eingesetzten Führungselementen (52), insbesondere aus Stahl bestehend, ausgebildet ist.

10. Kassette, insbesondere nach Anspruch 1, dadurch gekennzeichnet, daß Abstandshaltekörper (13, 44–46, 8, 9) zumindest in der Nähe von Führungs- und Ausrichtelementen (19-24) lösbar an mindestens einer der Boden- oder Deckelwände (10 bzw. 11) befestigt sind.

11. Kassette nach Anspruch 10, dadurch gekennzeichnet, daß die lösbar befestigten Abstandshaltekörper Eckteile (30, 44, 45) sind, die Führungs- und Ausrichtelemente (19, 24, 8, 9) mit Bandumlenkfunktion abdecken.

12. Kassette nach Anspruch 11, dadurch gekennzeichnet, daß die lösbar befestigten Abstandshaltekörper (46) an den Seiten des Gehäuses und um die vorderen und hinteren Ecken herumreichend angeordnet sind.

13. Kassette nach Anspruch 1 und einem oder mehreren der Ansprüche 2 bis 12, dadurch gekennzeichnet, daß Paßbohrungen (25) und -stifte (26) vorgesehen sind, mittels der insbesondere der Gehäuseteil (14) und die Abstandshaltekörper (13, 30, 44–46) relativ zu den Boden- und/oder Deckelwänden (10 bzw. 11) der Kassette (4–6) ausrichtbar und festlegbar sind.

14. Kassette nach Anspruch 1 und einem oder mehreren der Ansprüche 2 bis 12, dadurch gekennzeichnet, daß der Gehäuseteil (14) wenigstens einen Teil der Kassette (4, 5, 6), insbesondere einen erhöhten äußeren Teil (39), umfaßt, der wenigstens teilweise eine Referenz für das zugehörige Kassettengerät bildet.

15. Kassette nach Ansprüchen 1 bis 14, dadurch gekennzeichnet, daß ein einziges Gehäuseteil (14) mit Führungs- und Ausrichtelementen (22, 23, 19, 20) vorgesehen ist, das so angebracht ist, daß die Kassette (4, 5, 6) nur mit einer der Boden- oder Deckelwände (10 bzw. 11) auf- oder anliegend benutzbar ist.

16. Gehäuseteil für eine Kassette nach Anspruch 1 oder 6, dadurch gekennzeichnet, daß es die der Vorderwand (15) der Kassette (6) zugeordneten Führungs- und Ausrichtelemente (22, 23, 19, 20) und wenigstens einen Teil der Vorderwand (15) selbst aufweist.

17. Gehäuseteil nach Anspruch 16, dadurch gekennzeichnet, daß es wenigstens einen der Vorderwand (15) zugeordneten Abstandshaltekörper (13) aufweist.

18. Gehäuseteil nach Anspruch 16 oder 17, dadurch gekennzeichnet, daß die Führungselemente als Paßstifte (22, 23) ausgebildet sind, die in Paßbohrungen (58) vorgesehen sind.

19. Gehäuseteil nach Anspruch 17, dadurch gekennzeichnet, daß derselbe mit Paßbohrungen und -stiften (25, 26) zur Befestigung des Abstandshaltekörpers (13) versehen ist.

20. Verfahren zur Montage einer Kassette nach Anspruch 1 und einem oder mehreren der Ansprüche 2 bis 15, dadurch gekennzeichnet, daß der separate Gehäuseteil (13) mit den Ausricht- und Führungselementen (25, 26) und Befestigungselementen (25, 26) versehen wird, und als komplette Einheit am Boden- und/oder Deckelteil (10 bzw. 11) des Gehäuses befestigt wird.

**Claims**

1. A right parallelepiped cassette for tape-like recording media, consisting of base and lid walls (10 and 11) and front, rear and side walls which enclose one or more rotatable reels (8, 9) and a tape-like recording medium (7), the front, rear and side walls being partly or completely in the form of spacing elements between the base and lid walls (10, 11) and being fastened as such, and one or more housing parts having openings (16–18) to permit elements of the apparatus access to the recording medium and guide elements and/or alignment elements for the recording medium (7) being arranged at least in the proximity of this housing part, wherein the housing part with the openings (16–18) is in the form of a separate part (14), and is designed to hold one or more parts of the guide and alignment elements (19–14), and the base wall or lid wall (10, 11) has one or more reference surfaces (51, 52, 53) on which the housing part (14) can be fastened.

2. A cassette as claimed in claim 1, wherein the housing part (14) is provided with locating holes (58) for holding locating pins (22, 23) as guide elements for the recording medium (7).

3. A cassette as claimed in claim 1 or 2, wherein the guide and alignment elements (19–24) on the separate housing part (14) are covered by means of a spacing element (13) toward the interior of the cassette.

4. A cassette as claimed in claim 1 or 2 or 3, wherein the spacing element (13) is fastened to the base or lid wall (10 or 11) having the reference surface (51, 52).

5. A cassette as claimed in claim 1 or 2 or 3, wherein the separate housing part (14) is also designed for holding and fastening the spacing element (13) (Figs. 5 and 6).

6. A cassette as claimed in claim 1 or 2 or 3 or 4 or 5, wherein in a cassette (Figs. 1, 2, 3) having two coplanar reels (8, 9), the separate housing part (14) includes the central piece of the front wall.

7. A cassette as claimed in claim 1 or 6, wherein, in addition to a central piece of the front wall, the housing part (14) is also provided with a base part (57) which partly replaces the base or lid wall (10, 11) possessing the reference surfaces (51, 52, 53).

8. A cassette as claimed in claim 6, wherein the separate housing part (14) partly or completely replaces or covers the base or lid part (10 or 11) possessing the reference surface (51, 52, 53).

9. A cassette as claimed in claim 1 or 2 or 3 or 4 or 5 or 6 or 7 or 8, wherein the spacing element (13) is provided with inserted guide elements (52), in particular consisting of steel.

10. A cassette, in particular a cassette as claimed in claim 1, wherein spacing elements (13, 44–46, 8, 9) are detachably fastened to one or more of the base or lid walls (10 or 11), at least in the proximity of guide and alignment elements (19–24).

11. A cassette as claimed in claim 10, wherein the detachably fastened spacing elements are corner parts (30, 44, 45) which cover guide and alignment elements (19, 24, 8, 9) having a tape guide function.

12. A cassette as claimed in claim 11, wherein the detachably fastened spacing elements (46) are arranged on the sides of the housing and extend around the front and rear corners.

13. A cassette as claimed in claim 1 and one or more of claims 2 to 12, wherein locating holes (25) and pins (26) are provided, by means of which, in particular, the housing part (14) and the spacing elements (13, 30, 44–46) can be aligned and fastened relative to the base walls or lid walls (10 or 11) of the cassette (4, 6).

14. A cassette as claimed in claim 1 and one or more of claims 2 to 12, wherein the housing part (14) includes one or more parts of the cassette (4, 5, 6), in particular a raised outer part (39), which partly or completely forms a reference for the associated cassette recorder.

15. A cassette as claimed in claim 1 or 2 or 3 or 4 or 5 or 6 or 7 or 8 or 9 or 10 or 11 or 12 or 13 or 14, wherein a separate housing part (14) having guide and alignment elements (22, 23, 19, 20) is provided, the said housing part being mounted so that the cassette (4, 5, 6) can be used only with one of the base or lid walls (10 or 11) resting on top or adjacent.

16. A housing part for a cassette as claimed in claim 1 or 6, which has the guide and alignment elements (22, 23, 19, 20) associated with the front wall (15) of the cassette (16), and one or more parts of the front wall (15) itself.

17. A housing part as claimed in claim 16, which has one or more of the spacing elements (13) associated with the front wall (15).

18. A housing part as claimed in claim 16 or 17, wherein the guide elements are in the form of locating pins (22, 23), which are provided in locating holes (58).

19. A housing part as claimed in claim 17, which is provided with locating holes and pins (25, 26) for fastening the spacing element (13).

20. A method for assembling a cassette as claimed in claim 1 and one or more of claims 2 to 15, wherein the separate housing part (13) is provided with the alignment, guide and fastening elements (25, 26), and is fastened as a complete unit to the base or lid part (10 or 11) of the housing.

**Revendications**

1. Cassette de forme parallélépipédique pour support d'enregistrement en forme de bande, constituée de parois de fond et de dessus (10 et 11) et de parois avant, arrière et latérales, qui enveloppent au moins une bobine tournante (8, 9) et un support d'enregistrement en forme de bande (7), les parois avant, arrière et latérales étant réalisées et fixées, au moins partiellement, sous forme de corps de maintien d'écartement entre les parois de fond et de dessus (10, 11) et au moins une partie de boîtier présentant des ouvertures (16, 18) pour le passage d'organes de manoeuvre sur le support d'enregistrement et au moins au voisinage de cette partie de boîtier des éléments de guidage et/ou d'alignement étant prévus pour le support d'enregistrement (7), caractérisée par le fait que la partie de boîtier munie d'ouvertures (16–18) est conçue comme partie séparée (14) et est disposée pour recevoir au moins une partie des éléments de guidage et d'alignement (19–24) et la paroi de fond ou de dessus (10, 11) possède au moins une surface de référence (51, 52, 53) sur laquelle est fixable la partie de boîtier (14).

2. Cassette selon la revendication 1, caractérisée par le fait que la partie de boîtier (14) munie de trous de passage (58) pour recevoir des goujons de guidage est agencée comme élément de guidage pour le support d'enregistrement (7).

3. Cassette selon la revendication 1 ou 2, caractérisée par le fait que les éléments de guidage et d'alignement (19–24), sur la partie de boîtier séparée (14), sont couverts par rapport à l'intérieur de la cassette au moyen d'un corps de maintien d'écartement (13).

4. Cassette selon l'une des revendications 1 à 3, caractérisée par le fait que le corps de maintien d'écartement (13) est fixé sur la paroi de fond ou de dessus (10 ou 11) présentant la surface de référence (51, 52).

5. Cassette selon l'une des revendications 1 à 3, caractérisée par le fait que la partie de boîtier séparée (14) est agencée aussi pour recevoir et assurer la fixation du corps de maintien d'écartement (13) (fig. 5 et 6).

6. Cassette selon l'une des revendications 1 à 5, caractérisée par le fait que, pour une cassette (fig. 1, 2 et 3) à deux bobines coplanaires (8, 9), la partie de boîtier séparée (14) inclut la pièce médiane de la paroi avant.

7. Cassette selon la revendication 1 ou 6, caractérisée par le fait que, sur la partie de boîtier (14), outre une pièce médiane de la paroi avant, est prévue aussi une partie de fond (57) qui remplace partiellement la paroi de fond ou de dessus (10, 11) portant les surfaces de référence (51, 52, 53).

8. Cassette selon la revendication 6, caractérisée par le fait que la partie de boîtier séparée (14) remplacent ou couvre au moins partiellement la partie de fond et/ou de dessus (10 ou 11) portant les surfaces de référence (51, 52, 53).

9. Cassette selon l'une des revendications 1 à 8, caractérisée par le fait que le corps de maintien d'écartement (13) est formé avec des éléments de guidage incorporés (52) en particulier en acier.

10. Cassette, selon la revendication 1, caractérisée par le fait que, au moins au voisinage des éléments de guidage et d'alignement (19–24), des corps de maintien d'écartement (13, 44–46, 8, 9) sont fixés amovibles sur au moins une des parois de fond ou de dessus (10 ou 11).

11. Cassette selon la revendication 10, caractérisée par le fait que les corps de maintien d'écartement fixés amovibles sont des parties angulaires (30, 44, 45) qui couvrent les éléments de guidage et d'alignement en assurant un détournement de la bande.

12. Cassette selon la revendication 11, caractérisée par le fait que les corps de maintien d'écartement fixés amovibles sont disposés sur les côtés du boîtier et passent autour des angles avant et arrière.

13. Cassette selon la revendication 1 et une ou plusieurs des revendications 2 à 12, caractérisée par le fait que sont prévus des trous de passage (25) et les goujons de guidage (26) au moyen desquels en particulier la partie de boîtier (14) et le corps de maintien d'écartement (13, 30, 44–46) sont fixables et alignables par rapport aux parois de fond et/ou de dessus (10 ou 11) de la cassette (4–6).

14. Cassette selon la revendication 1 et une ou plusieurs des revendications 2 à 12, caractérisée par le fait que la partie de boîtier (14) comprend au moins une partie de la cassette (4, 5, 6), en particulier une partie externe surélevée (39), qui forme au moins partiellement une référence pour l'appareil à cassette associé.

15. Cassette selon l'une des revendications 1 à 14, caractérisée par le fait qu'il est prévu une seule partie de boîtier (14), munie d'éléments de guidage et d'alignement (22, 23, 19, 20), qui est placée de manière que la cassette (4, 5, 6) ne soit utilisable qu'avec une des parois de fond ou de dessus (10 ou 11) en position d'appui ou de contact.

16. Partie de boîtier pour cassette selon la revendication 1 ou 6, caractérisée par le fait qu'elle possède elle-même les éléments de guidage et d'alignement (22, 23, 19, 20) associés à la paroi avant (15) de la cassette (6) et au moins une partie de la paroi avant (15).

17. Partie de boîtier selon la revendication 16, caractérisée par le fait qu'elle possède au moins un corps de maintien d'écartement associé à la paroi avant (15).

18. Partie de boîtier selon la revendication 16 ou 17, caractérisée par le fait que les éléments de guidage sont en forme de goujons (22, 23) qui sont prévus dans des trous de passage (58).

19. Partie de boîtier selon la revendication 17, caractérisée par le fait que le même avec trous de passage et goujons de guidage (25, 26) est prévu pour la fixation du corps de maintien d'écartement (13).

20. Procédé de montage d'une cassette selon la revendication 1 et une ou plusieurs des revendications 2 à 15, caractérisé par le fait qu'on munit la partie de boîtier séparée (14) des éléments de guidage et d'alignement (25, 26) et des éléments de fixation (25, 26), et on la fixe sous forme d'unité complète sur la partie de fond et/ou de dessus (10 ou 11) du boîtier.

EP 0 261 373 B1

FIG.1

# FIG. 1A

# FIG.2

# FIG.3

# FIG.4

# FIG.5

# FIG.6

## FIG.7